# EUROPEAN PATENT SPECIFICATION

(11) **EP 0 599 196 B1**
(45) Date of publication and mention of the grant of the patent: **20.03.1996**
(21) Application number: 93118570.6
(22) Date of filing: 03.07.1991
(51) Int. Cl.: F04B 17/00, F04B 9/12, F04B 45/02, F04B 9/10, F04F 1/06

(54) **A water pumping apparatus**
Wasserpumpenvorrichtung
Dispositif de pompage d'eau

(30) Priority: 03.07.1990 JP 174532/90
(43) Date of publication of application: 01.06.1994
(62) Divisional of application: 91306057.0
(73) Proprietor: Nagata, Tsugio, Suginami-ku, Tokyo (JP)
(72) Inventor: Nagata, Tsugio, Suginami-ku, Tokyo (JP)
(74) Representative: Rackham, Stephen Neil

(56) References cited:
- EP-A- 0 192 246
- DE-A- 2 406 756
- US-A- 2 840 004
- US-A- 4 426 846
- PATENT ABSTRACTS OF JAPAN vol. 10, no. 37 (M-453)14 February 1986 & JP-A-60 190 679 (MASAO KANAZAWA) 28 September 1985

## Description

The present invention relates to a water pumping apparatus for use in hydro-electric power generation utilising compressed air, for example, produced by the method and apparatus described and claimed in our co-pending European Application No. 91306057.0 (Publication No. 0,465,242).

Energy available at present in the world relies heavily on coals, petroleum, nuclear power, the use of which often results in environmental destruction. On the other hand, hydro-electric power, wind power or wave power whose power has nothing to do with environmental destruction has little or no prospect of great development.

DE-A-2406756 discloses an apparatus for pumping up water to a water reservoir utilizing the pressure of wave power and suggests the idea of converting irregular wave energy into continuous energy having constant potential energy.

US-A-4426846 provides a pressure tank in order to enable irregular natural power to be driven continuously, utilizes wave power, wind power and geothermal power in total, and suggests the idea of applying excess electric power other than the electric power required for the related equipment to the public electric power.

Our co-pending European application no. 91306057.0 (publication no. 0,465,242) describes and claims a method and apparatus for producing compressed air. The method comprises the steps of sealing air in a container capable of reducing its volume upon the application of an actuating force, inserting under pressure compressed air produced when the volume of the container is reduced by the actuating force into a recovery vessel connected to the container via a non-return valve, and further comprises the steps of attaching a weight having a larger specific gravity than water to the container and sinking the container deep under water to reduce the volume of the container by the application of its general hydraulic pressure, separating the weight from the container to cause the container to float to the water's surface by the action of buoyancy and, recovering the recovery vessel containing the compressed air, whereby the compressed air can subsequently be recovered from the recovery vessel.

According to the present invention a water pumping apparatus for use in hydro-electric power generation using compressed air as its motive power comprises:
a container interposed between an upstream water reservoir of a hydro-electric power generating apparatus for storing the water subjected to hydro-electric power generation and a downstream water reservoir;
means accommodated within the container for dividing the interior of the container into a water tank chamber and an air expansion chamber;
a water inlet tube connected to the water tank chamber via a first control valve for regulating the flow rate of the water supplied from the downstream water reservoir into said water tank chamber; and,
a water feed pipe connected to the water tank chamber via a second control valve for regulating the flow rate of the water fed under pressure from the water tank chamber into the upstream water reservoir;
and is characterised in that the apparatus further comprises a recovery vessel containing compressed air therein and connected via a flow regulating valve to the air expansion chamber for discharging the compressed air contained in the recovery vessel into the air expansion chamber to expand the volume of air in the air expansion chamber and thereby drive water out of the water tank chamber and hence out of the container via the pipe to the upstream water reservoir.

The present invention utilises three physical properties, i.e. the fact that a substance at a high position has a higher potential energy than a substance at a low position, that buoyancy acts on a substance in water and that hydraulic pressure increases in proportion to depth of water.

The air expansion energy of the recovered compressed air can be applied to a hydro-electric power generating apparatus. In this case, the water once subjected to power generation can be repeatedly re-cycled. Therefore, the hydraulic power generation otherwise limited by the amount of rain water can be utilised to the maximum possible extent. In addition, the hydro-electric power generation can be applied to a private power generation in a multi-stored building, for example.

The present invention will now be described with reference to the accompanying drawings, in which:-
Figure 1 is a schematic cross section illustrating one embodiment of a water pumping apparatus according to the present invention for use in hydro-electric power generation utilising compressed air; and,
Figure 2 is a schematic cross section illustrating another embodiment of a water pumping apparatus according to the present invention.

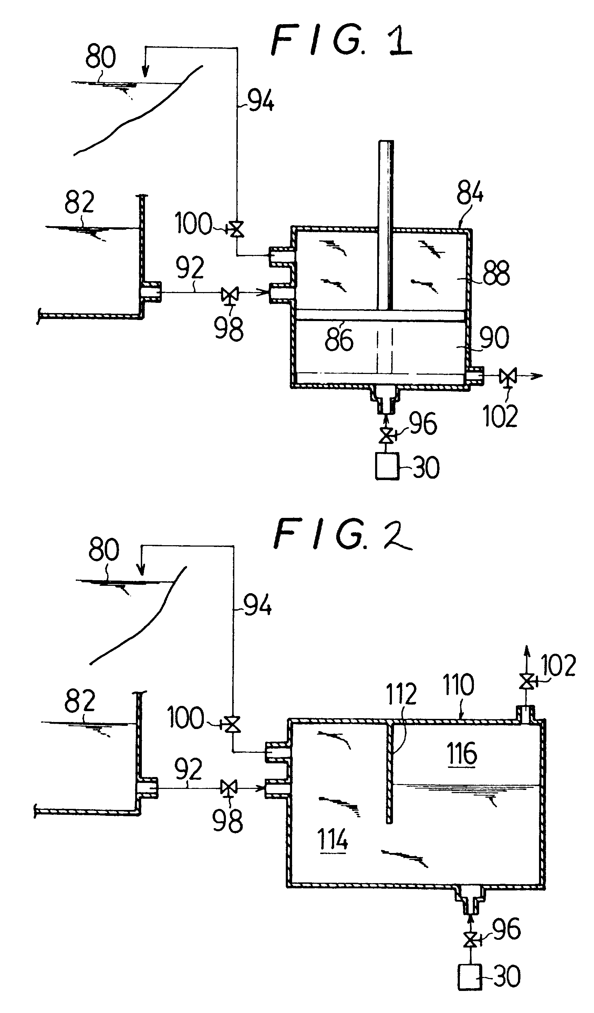

Figures 1 and 2 show water pumping apparatus according to the present invention for use in hydro-electric power generation utilising the compressed air produced by the compressed air production apparatus described and claimed in our co-pending European Application No. 91306057.0 (Publication number 0,465,242).

The water pumping apparatus of Figure 1 comprises a container 84 disposed between an upstream water reservoir 80 of a hydro-electric power generating apparatus (not shown) and a downstream water reservoir 82 for reserving water. The interior of the container 84 is divided into an upper water tank chamber 88 and a lower air expansion chamber 90 through a piston 86 which is slidable in the vertical direction within the container 84. The water tank chamber 88 is connected to a water inlet tube 92 for flowing water into the water tank chamber 88 from the downstream water reservoir 82 and also to a water feed tube 94 for feeding under pressure the water reserved in the chamber 88 to the upstream water reservoir 80. The air expansion chamber 90 is provided with an air recovery vessel 30 containing compressed air for pushing up the piston 86 in order to expand the volume of the air expansion chamber 90. The recovery vessel 30 contains the compressed air recovered by the compressed air producing apparatus described in the aforementioned European application. Between the air recovery vessel 30 and the air expansion chamber 90, a first control valve 96 is disposed. By adjusting the first control valve 96, the amount of compressed air to be discharged into the air expansion chamber 90 from the recovery vessel 30 is regulated. In Figure 1, reference numeral 98 denotes a second control valve disposed at the water inlet tube 92, numeral 100 denotes a third control valve disposed at the water feed tube 94, and numeral 102 denotes a fourth control valve disposed at an air vent pipe. These valves are operated to control the flow of water or air.

The water pumping apparatus of Figure 2 comprises a container 110 disposed between an upstream water reservoir 80 of a hydro-electric power generating apparatus (not shown) and a downstream water reservoir 82 for reserving the water. The interior of the container 84 is divided by a partition wall 112 into a water tank chamber 114 and an air expansion chamber 116 which communicates with each other at the lower part of the container 110. The water tank chamber 114 is connected to a water inlet tube 92 for flowing water into the water tank chamber 114 from the downstream water reservoir 82 and also to a water feed tube 94 for feeding under pressure the water reserved in the chamber 114 to the upstream water reservoir 80. The air expansion chamber 116 is provided with a recovery vessel 30 containing compressed air for expanding the volume of the air expansion chamber 116. The apparatus of Figure 2 is designed such that air bubbles of the compressed air to be discharged into the container 110 from the recovery vessel 30 rise upward by means of buoyancy and are pooled in the air expansion chamber 116 divided by the partition wall 112. The remaining construction thereof is the same as that of the apparatus of Figure 1.

The operation of the water pumping apparatus shown in Figures 1 and 2 will be described.

First, water from the downstream water reservoir, is caused to flow into the water tank chamber 88 or 114 from the downstream water reservoir 82 through the water inlet tube 92 until the water tank chamber 88 or 114 is filled with the water. The air in the air expansion chamber 90 or 116 is all drafted by opening the fourth control valve 102. The second and fourth control valves 98 and 102 are closed, while the third control valve 100 is opened. The first control valve 96 of the recovery vessel 30 is mounted to air expansion chamber 90 or 116 in a slightly open state. The apparatus of Figure 1 represents a case where the piston is used. Since the pressure of compressed air discharged from the recovery vessel 30 is much greater than the hydraulic pressure in the water tank chamber 88, it pushes the piston 86 upward. The apparatus of Figure 2 represents a case where the piston is not used. Air bubbles of the compressed air discharged from the recovery vessel 30 rise in the water filled in the water tank chamber 114 while expanding its volume and are pooled in the air expansion chamber 116. In either case, the volume of the air expansion chamber 90 or 116 is gradually increased. Water rises through the water feed tube 94 by the amount equivalent to the increased volume of the air expansion chamber. When the tube 94 has been filled with water, the water flows into the upstream water reservoir 80. When the discharge of the compressed air from the recovery vessel 30 has been substantially stopped, the third control valve 100 is closed and the fourth control valve 102 is opened to draft air, and the second control valve 98 is opened to introduce the water which has already been subjected to hydro-electric power generation into the water tank chamber 88 or 114. When all air in the air expansion chamber 90 or 116 has been drafted, the second and fourth control valves 98 and 102 are closed, a new recovery vessel 30 is attached, the third control valve 100 is opened and then the aforementioned procedure is repeated. By repeating the aforementioned procedure, water which has already been subjected to hydro-electric power generation can be sent back to the upstream water reservoir 80, so that it can be repeatedly used for hydro-electric power generation.

## Claims

1. A water pumping apparatus for use in hydro-electric power generation using compressed air as its motive power comprising:
a container (84, 110) interposed between an upstream water reservoir (80) of a hydro-electric power generating apparatus for storing the water for hydro-electric power generation and a downstream water reservoir (82);
means (86, 112) accommodated within the container (84, 110) for dividing the interior of the container (84, 110) into a water tank chamber (88, 114) and an air expansion chamber (90, 116);
a water inlet tube (92) connected to the water tank chamber (88, 114) via a first control valve (98) for regulating the flow rate of the water supplied from the downstream water reservoir (82) into said water tank chamber (88, 114); and,
a water feed pipe (94) connected to the water tank chamber (88, 114) via a second control valve (100) for regulating the flow rate of the water fed under pressure from the water tank chamber (88, 114) into the upstream water reservoir (80);
characterised in that the apparatus further comprises a recovery vessel (30) containing compressed air therein and connected via a flow regulating valve (96) to the air expansion chamber (90, 116) for discharging the compressed air contained in the recovery vessel (30) into the air expansion chamber (90, 116) to expand the volume of air in the air expansion chamber (90, 116) and thereby drive water out of the water tank chamber (88, 114) and hence out of the container (84, 110) via the pipe (94) to the upstream water reservoir.

2. A water pumping apparatus according to claim 1, in which the means accommodated within the container (84) for dividing the interior of the container (84) comprises a piston (86) slidable within the container (84).

3. A water pumping apparatus according to claim 1, in which the means accommodated within the container (110) for dividing the interior of the container (110) comprises a partition wall (112) which separates the container (110) into the water tank chamber (114) and the air expansion chamber (116) and allows communication between them at a lower part of the container (110).

## Patentansprüche

1. Wasserpumpengerät für den Gebrauch in einem Wasserkrafterzeuger unter Verwendung von komprimierter Luft als Antriebskraft, umfassend
- einen Behälter (84, 110), der zwischen einem Wasserreservoir (80) oberhalb zur Speicherung des Wassers für die Wasserkrafterzeugung und einem Wasserreservoir (82) unterhalb des Wasserkrafterzeugers angeordnet ist,
- Mittel (86, 112), die innerhalb des Behäters (84, 110) angeordnet sind, um das Innere des Behälters (84, 110) in eine Wassertank-Kammer (88, 114) und eine Luftausdehn-Kammer (90, 116) zu unterteilen,
- ein Wasser-Einlaßrohr (92), das mit der Wassertank-Kammer (88, 114) über ein erstes Steuerventil (98) zur Regulierung der Durchflußrate des Wassers von dem unterhalb liegenden Wasserreservoir (82) in die Wassertank-Kammer (88, 114) verbunden ist und
- ein Wasserzuführrohr (94), das mit der Wassertank-Kammer (88, 114) über ein zweites Steuerventil (100) zur Regulierung der Durchflußrate des Wassers, das unter Druck von der Wassertank-Kammer (88, 114) dem oberhalb gelegenen Wasserreservoir (80) zugeführt wird, verbunden ist,
dadurch **gekennzeichnet**, daß das Gerät ferner ein Ausgleichsgefäß (30) umfaßt, das komprimierte Luft enthält und mit der Luftausdehn-Kammer (90, 116) über ein Regelventil (96) verbunden ist, um die im Ausgleichsgefäß (30) vorhandene komprimierte Luft in die Luftausdehn-Kammer (90, 116) ausströmen zu lassen, wodurch das Volumen der Luft in der Luftausdehn-Kammer (90, 116) vergrößert wird und hierdurch Wasser aus der Wassertank-Kammer (88, 114) und damit aus dem Behälter (84, 110) über die Rohrleitung (94) zum oberhalb gelegenen Wasserreservoir gepumpt wird.

2. Wasserpumpengerät nach Anspruch 1, dadurch **gekennzeichnet**, daß die Mittel, die innerhalb des Behälters (84) zur Unterteilung des Inneren des Behälters (84) angeordnet sind, einen innerhalb des Behälters (84) verschiebbaren Kolben (86) aufweisen.

3. Wasserpumpengerät nach Anspruch 1, dadurch **gekennzeichnet**, daß die innerhalb des Behälters (110) angeordneten Mittel zur Unterteilung des Inneren des Behälters (110) eine Scheidewand (112) aufweisen, die den Behälter (110) in die Wassertank-Kammer (114) und die Luftausdehn-Kammer (116) unterteilt und eine Verbindung zwischen den beiden Kammern im unteren Abschnitt des Behälters (110) ermöglicht.

## Revendications

1. Installation de pompage de l'eau destinée à être utilisée pour la production d'énergie hydro-électrique en utilisant de l'air comprimé comme énergie motrice, comprenant.:
un récipient (84, 110) interposé entre un réservoir d'eau amont (80) de l'installation de production d'énergie hydro-électrique pour stocker l'eau en vue de la production d'énergie hydro-électrique et un réservoir d'eau aval (82) ;
des moyens (86, 112) logés dans le récipient (84, 110) pour diviser l'intérieur du récipient (84, 112) en une chambre formant réservoir d'eau (88, 114) et une chambre de détente de l'air (90, 116) ;
un tube d'entrée d'eau (92) relié à la chambre formant réservoir d'eau (88, 114) par une première vanne de commande (98) destinée à régler le débit de l'eau transmise du réservoir d'eau aval (82) à la chambre formant réservoir d'eau (88, 114) ; et
un tube d'envoi de l'eau (94) relié à la chambre formant réservoir d'eau (88, 114) par une deuxième vanne de commande (100) servant à régler le débit de l'eau envoyée sous pression de la chambre formant réservoir d'eau (88, 114) vers le réservoir d'eau amont (80) ;
caractérisée en ce que l'installation comprend en outre une capacité de récupération (30) contenant intérieurement de l'air comprimé et reliée par une vanne (96) de réglage du débit à la chambre de détente de l'air (90, 112) pour décharger l'air comprimé contenu dans la capacité de récupération (30) dans la chambre de détente de l'air (90, 116) pour agrandir le volume d'air contenu dans la chambre de détente de l'air (90, 116) et, par ce moyen, chasser l'eau de la chambre formant réservoir d'eau (88, 114), et par conséquent du récipient (84, 110), vers le réservoir d'eau amont en passant par le tube (94).

2. Installation de pompage d'eau selon la revendication 1, dans laquelle les moyens logés dans le récipient (84) pour diviser l'intérieur du récipient (84) comprennent un piston (86) qui peut coulisser dans le récipient (84).

3. Installation de pompage d'eau selon la revendication 1, dans laquelle les moyens logés dans le récipient (110) pour diviser l'intérieur du récipient (110) comprennent une cloison (112) qui divise le récipient (110) en la chambre (114) formant réservoir d'eau et la chambre de détente de l'air (116) et admet la communication entre ces chambres au niveau d'une partie inférieure du récipient (110).
